# EUROPEAN PATENT APPLICATION

(11) **EP 2 768 288 A1**
(43) Date of publication of application: **20.08.2014**
(21) Application number: 13382050.6
(22) Date of filing: 19.02.2013
(51) Int. Cl.: H05B 37/02

(54) **Method for managing a lighting system**

(71) Applicant: Lighting Intelligence SL, 08018 Barcelona (ES)
(72) Inventor: Tey Pons, Francisco Javier, 08018 Barcelona (ES); Portell Guarch, Jaume, 08018 Barcelona (ES)
(74) Representative: Carpintero Lopez, Francisco

(57) **Abstract**

The present invention relates to a method for managing a lighting system characterized in that it comprises the steps of: detecting sensory stimuli, producing a plurality of corresponding signals; sending said signals to a database; integrating all the signals sent to said database to generate reports, correlations and/or patterns; and performing one or several actions on the lighting system depending on the obtained reports, correlations and/or patterns.

The present invention allows adjusting users' experience with respect to the lighting, reacting to different experience factors in real time, saving energy consumption, since the lighting will be efficiently managed depending on the actual needs of the users and obtaining maps providing information in real time which can be remotely managed at all times.

## Description

The present invention relates to a method for managing a lighting system based on data received from mobile devices and/or sensors.

### Background of the Invention

The use of a lighting system which correctly lights all the areas depending on the use thereof is necessary in establishments such as business premises. Therefore, areas to be emphasized or which are envisaged to have a greater number of visitors are usually lit with greater intensity.

The lighting in said establishments covers the entire working surface, with a greater emphasis on those places where products or services are offered. It is also used for the purpose of guiding people through specific routes.

Therefore, the most common purpose of lighting systems is to favor the use of public or private spaces, improving the user's experience of said spaces and emphasizing the usefulness of the services offered therein.

In fact, the customer's experience in those business premises, and specifically at each different point of these business premises, is greatly conditioned by light intensity, its color, its beam and its chromatic reproduction, but it is also influenced by other factors such as sound, temperature and ambient humidity.

However, despite their strategic location, conventional lighting systems act as mere light emitters without measuring in any way whatsoever the experience at the point where they are installed, losing the opportunity of automatically or manually making decisions that transform the customers' experience, improving it or adapting it to the rationale behind the space and to the specific conditions of each moment.

On the other hand, today in business it is common to use data to analyze activities or factors that condition company results. For example, users' preferred choices of products in a business premise can be known today and decisions can be made depending on said data, for example changing the arrangement of the goods to be sold or to be put on sale, etc.

Despite significant data being available for some of the key factors in business results, data representing the customer's sensory experience in the business premise, i.e., the lighting level, number of people occupying the space, arrangement by areas in the shop, sound level at each point, temperature and humidity, etc., is not available today.

Therefore, it is evident that there is a need for a method for managing lighting which allows obtaining sensory evidence in an integral manner, taking advantage of the strategic location thereof, which allows understanding the fundamental factors making up the experience at the point of sale, and which provides mechanisms for managing the lighting of an establishment, such as a business premise, depending on the actual wirelessly obtained data.

The method for managing lighting must therefore incorporate the capacity to collect sensory evidence, specifically to measure light intensity, to measure temperature and humidity, to measure ambient sound, to estimate the number of people present in the establishment by means of capturing radio signals coming from their mobile telephones or other devices and to use cameras for identifying the physical presence of people and their paths.

The method for managing lighting will in turn be complemented by a mechanism capable of collecting other determinant information, such as the weather in the town where the establishment is located, the outdoor temperature and humidity, the sales made at all times and combining this information with the data collected by the lighting device under the exact same time pattern.

Therefore, a first objective of the present invention is to provide a method for managing lighting which allows capturing the mentioned sensory evidence in a synchronized manner, generating valuable data for the owners of the establishment, and at the same time allowing intelligent lighting management according to business rules that are or are not linked with the taken metrics. Furthermore, a second objective of the present invention is to enable easily converting conventional lighting fixtures into a lighting device to carry out the method according to the present invention by simply connecting a module in a conventional lighting fixture, with the evident economical benefit that it would entail.

### Description of the Invention

The method for managing a lighting system of the invention successfully solves the mentioned drawbacks based on data received from mobile devices and/or sensors, having other advantages which will be described below.

The method for managing a lighting system of the present invention is **characterized in that** it comprises the steps of:
- detecting sensory stimuli, producing a plurality of corresponding signals;
- sending said signals to a database;
- integrating all the signals sent to said database to generate reports, correlations and/or patterns;
- performing one or several actions on the lighting system depending on the obtained reports, correlations and/or patterns.

Advantageously, the actions performed on the lighting system comprise:
- turning the lights on/off;
- changing light intensity;
- changing the color of the lights; and/or
- changing the pattern of the lights in a modulated manner.

In the method for managing a lighting system according to the present invention, the step of detecting sensory stimuli preferably comprises wirelessly detecting the presence of people in an establishment, the temperature, the humidity, the noise level, the brightness level, the distance from moving objects or people, or external events, which also produce a plurality of corresponding signals that are sent to said database and integrated to generate said reports, said correlations or said patterns.

According to a preferred embodiment, wirelessly detecting the presence of a plurality of users is performed by means of WiFi or Bluetooth.

Advantageously, human movement maps, light point maps, noise level maps, and/or temperature maps are generated based on integrating all the signals sent to said database.

Furthermore, the step of integrating all the signals sent to said database comprises synchronizing said signals over time.

The method of the present invention successfully achieves the following advantages:
- adjusting users' experience with respect to the lighting;
- reacting to different experience factors in real time;
- saving energy consumption since the lighting will be efficiently managed depending on the actual needs of the users;
- obtaining maps providing information in real time which can be remotely managed at all times.

### Description of a Preferred Embodiment

The method for managing a lighting system of the present invention first comprises the step of detecting a series of parameters or signals such as the presence of users in an establishment.

This presence of users can be detected through mobile devices of the users themselves, for example, their mobile telephones through WiFi or Bluetooth connections.

Furthermore, in the method of the present invention other parameters or signals, such as the temperature, the humidity, the noise level, the brightness level, the distance from moving objects and/or people, or external events, can also be detected. All these parameters or signals can be detected by means of suitable sensors, such as light sensors, thermometers, microphones, cameras, wired or wireless data networks, etc.

For example, a temperature sensor based on a microprocessor integrated in a lighting fixture which can compile temperature data from time to time and send the data of the registers locally or over a network service (through HTTP requests or any other network protocol), can be used for detecting the temperature and humidity level. A clock determines the exact time at which the measurement has been taken, which time must be the same for this and for any other piece of data of the system.

Furthermore, a microphone in equipment based on a microprocessor integrated in the lighting system which can compile noise level data from time to time and send the data locally or over a network service (through HTTP requests or any other network protocol), can be used to detect the noise level.

Detecting the presence of people can be performed by means of installing a WiFi or Bluetooth antenna in a computer based on a microprocessor integrated in the lighting system which can start detecting the sounding signals of WiFi or Bluetooth devices, including the feed strength to deduce the estimated distance of the device from the antenna. The information is recorded from time to time or in a continuous manner and the data is recorded locally or over a network service (through HTTP requests or any other network protocol).

Detecting light levels can be performed by means of a sensor or a camera in equipment based on a microprocessor integrated with the lighting system which collects light level indicators from time to time and records the data locally or over a network service (through HTTP requests or any other network protocol).

Detecting the distance from moving objects or people can be performed by means of placing various cameras in equipment based on a microprocessor integrated with the lighting system which collects light level indicators and images (continuous video or images) and records the data locally or over a network service (through HTTP requests or any other network protocol). The images can be processed in the sensor itself or in a concentrator depending on the energy characteristics of each model.

Furthermore, the system operated by the method of the present invention will increase its delivery capacities by means of connection to other sensors and devices through WiFi, Bluetooth, ZigBee, PLC network, Ethernet or any other wired or wireless network. The system will also be capable of receiving events through a network connection or any other type of network protocol and will record them as they are produced.

All this data is integrated in a database which provides reports, correlations and patterns to the system's owner. All this data can be sent through the Internet to a group of servers which will be responsible for collecting the data in time real to perform an immediate action on the lighting system of a premise, and furthermore, they can also generate warnings, process pre-established reports on a daily basis, run business intelligence algorithms for extracting and analyzing key indicators using data mining techniques for mining the volumes of compiled data to provide, for example, behavioral patterns and hidden correlations between sales and the sales measurement point.

The following actions in particular can be performed in the lighting system:
- turning the lights on or off;
- controlling light intensity;
- changing the color of the lights; and
- changing the pattern of the lights in a modulated manner.

The following can particularly be performed by means of the method of the present invention:
- detecting popular movements in the space (see the map in Figure 1);
- identifying the behavioral patterns of anonymous customers or users;
- identifying the behavior of mobile telephones which were in a specific position in the shop when a specific event occurs (for example, a specific product was acquired or tried out);
- identifying the conditions which are correlated with certain events (sales, trying out a product, etc.) with the conditions of the data of the shop (people present, light level, noise level, temperature level) in the exact same time pattern;
- analyzing the position of the lights in the space automatically and reporting same to the central servers;
- saving energy based on the presence of people in the place;
- saving energy based on the overlapping of lights;
- capturing necessary information for generating noise level maps in the central servers;
- capturing necessary information for generating temperature maps in the central servers;
- capturing necessary information for generating light level maps in the central servers;
- customizing the light projection on a wall based on the people who are facing the wall.
- detecting popular movements in the space.

Customers' behavioral patterns can also be anonymously identified by means of the method of the present invention because as customers check their mobile devices identified by their MAC address (anonymously through coding using an irreversible mathematical function), the system will be capable of determining the following information:
- the average shop visit duration by means of identifying the first and the last piece of evidence in a specific time period for each mobile telephone and calculating averages;
- frequency with which one and the same device visits the shop (by means of detecting evidence repetition in different visits);
- people passing by and entering the shop;
- people passing by and not entering the shop; and
- other behavioral patterns.

By correlating the presence of mobile telephones (detected through proximity to certain sensors) with events (such as purchase, product tasting, etc.), the paths and the main behavioral characteristics of the mobile telephones and therefore of their users, could be known, leading to the decision in relation to the lighting system. The reports identify the same visit patterns when the event occurred (for example, a customer passes by a product tasting area when he/she bought the tested product) or in prior or future events (for example, a customer purchases a car after visiting the shop more than 5 times).

This evidence will allow obtaining information about the path patterns (where the mobile telephone was before the event, where it was after the event, etc.), the behavioral patterns (such as the number of times the customer visited the shop before purchasing), and many other patterns that can be shown by data correlation.

It also allows identifying the conditions correlating certain events (sales, trying out a product, etc.) with the objective conditions of the shop (people present, light level, noise level, temperature level, etc.) in the same time pattern.

Generally, a very precise correlation of all the described metrics and data can be established by having all of them recorded in the same time pattern, thus determining the ideal conditions which best correlate with certain events, for example, product acquisition.

Correlations can also show if customers acquire more products if they are offered a certain path in the shop, for example. The analysis of the position of the lights in the space is performed automatically and it is reported to the central servers.

The system operated by the method according to the present invention based on the real time data of the presence of people in the shop is capable of regulating the light intensity or even deactivating some of the light points.

With the method of the present invention, it is possible to create intelligent walls depending on who is facing the walls, detecting every step made by a different individual facing the wall and generating the corresponding lighting effects.

Another advantage of the invention is to allow lighting-integrated temperature detection, achieving the actual premise temperature regardless of the light level and therefore regardless of the heat generated by the light detected by the sensor.

In order to solve that technical problem, each lighting fixture model is measured in a controlled environment in the entire range of external temperatures and in the entire range of light levels, producing a correction table which will be specific for each lighting fixture model and for a specific temperature sensor.

To allow detecting the light intensity of the light, the lighting level generated by the light itself and by other lights or by natural light must be isolated. The system will automatically tune in to be able to determine the light level produced by the light itself, the light level produced by the surrounding lights and natural light. This process will be carried out at least once every time a new light is detected in the lighting system.

Since the system will be capable of automatically detecting the presence of a new light in the shop (through wireless scanning or through camera identification), the method will start automatically at a time when the shop is closed (the system will have this information).

The method of determining in a closed shop and ideally overnight is as follows:
- all the lights will be turned off;
- natural light will first be measured;
- the first light will be turned on at different intensity levels;
- the first light itself will be measured and naturally generated light will be ruled out;
- all the other lights will also be measured, creating a map of how they relatively interact with one another when the first light is at each intensity;
- the first light will be turned off;
- all the other lights will be turned on at different intensities;
- the process is repeated for each light, creating a database and a light level map.

This automatic adjustment process can be deactivated and all the measurements will be saved as a backup copy and as reference.

To detect Bluetooth devices, the system will generate a device detection query and wait for at least 15 seconds to allow the devices to respond to the call.

In order to assure the anonymity of the collected data, the system will generate an MD5 hash and will only store that irreversible chain as a device identifier.

In order to detect Wi-Fi devices, the system will activate a Wi-Fi antenna in promiscuous mode and collect evidence of Wi-Fi signals in different Wi-Fi network channels.

In order to assure the anonymity of the collected data, the system will generate an MD5 hash and will only store that irreversible chain as a device identifier.

To assure that the measurements in all the sensors are synchronized, the sensors will send all the data in real time to the concentrator which is located in the same local network and which will be responsible for establishing the time.

Some examples of the detection of events that determine the conditions for turning the lighting system on/off are described below.

Event: A table in a restaurant has been empty for a while (detected by WiFi, Bluetooth and a camera in the light). Action: the light level for that table is reduced aiding in creating a more relaxing atmosphere.

Event: A new customer enters the restaurant and a free table automatically turns on its light gradually, inviting the customer to enter.

Despite the fact that reference has been made to a specific embodiment of the invention, it is evident for a person skilled in the art that the method for managing a lighting system described is susceptible to variations and modifications, and that all the mentioned details can be replaced with other technically equivalent details without departing from the scope of protection defined by the attached claims.

## Claims

1. Method for managing a lighting system, **characterized in that** it comprises the steps of:
- detecting sensory stimuli, producing a plurality of corresponding signals;
- sending said signals to a database;
- integrating all the signals sent to said database to generate reports, correlations and/or patterns; and
- performing one or several actions on the lighting system depending on the obtained reports, correlations and/or patterns.

2. Method for managing a lighting system according to claim 1, wherein the detection of sensory stimuli comprises wirelessly detecting the presence of a plurality of users.

3. Method for managing a lighting system according to claim 1, wherein the actions performed on the lighting system are chosen from the group comprising:
- turning the lights on/off;
- changing light intensity;
- changing the color of the lights; and/or
- changing the pattern of the lights in a modulated manner.

4. Method for managing a lighting system according to claim 1 or 2, wherein the detection of sensory stimuli comprises detecting temperature, humidity, noise level, brightness level, distance from moving objects or people, or external events, which also produce a plurality of corresponding signals that are sent to said database and integrated to generate said reports, said correlations or said patterns.

5. Method for managing a lighting system according to claim 2, wherein wirelessly detecting the presence of a plurality of users is performed by means of WiFi or Bluetooth.

6. Method for managing a lighting system according to claim 1, wherein human movement maps are generated based on integrating all the signals sent to said database.

7. Method for managing a lighting system according to claim 4, wherein light point maps are generated based on integrating all the signals sent to said database.

8. Method for managing a lighting system according to claim 4, wherein noise level maps are generated based on integrating all the signals sent to said database.

9. Method for managing a lighting system according to claim 4, wherein temperature maps are generated based on integrating all the signals sent to said database.

10. Method for managing a lighting system according to claim 1, wherein the step of integrating all the signals sent to said database comprises synchronizing said signals over time.
